# EUROPÄISCHE PATENTSCHRIFT

(11) **EP 3 684 648 B1**
(45) Veröffentlichungstag und Bekanntmachung des Hinweises auf die Patenterteilung: **23.06.2021**
(21) Anmeldenummer: 18772771.4
(22) Anmeldetag: 11.09.2018
(51) Int. Cl.: B60R 1/04

(54) **ANORDNUNG ZUR BEFESTIGUNG EINES INNENRÜCKSPIEGELS AN EINEM FAHRZEUG SOWIE FAHRZEUG MIT EINER DERARTIGEN BEFESTIGUNGSANORDNUNG**
DEVICE FOR MOUNTING AN INSIDE REAR-VIEW MIRROR IN A VEHICLE AND VEHICLE COMPRISING SUCH A MOUNTING ARRANGEMENT
DISPOSITIF DE FIXATION D'UN RÉTROVISEUR INTÉRIEUR SUR UN VÉHICULE ET VÉHICULE ÉQUIPÉ UN TEL DISPOSITIF

(30) Priorität: 21.09.2017 DE 102017216764
(43) Veröffentlichungstag der Anmeldung: 29.07.2020
(73) Patentinhaber: Volkswagen Aktiengesellschaft, 38440 Wolfsburg (DE)
(72) Erfinder: KAHRENS, Dietmar, 38467 Bergfeld (DE)
(86) Internationale Anmeldenummer: PCT/EP2018/074420
(87) Internationale Veröffentlichungsnummer: WO 2019/057544

(56) Entgegenhaltungen:
- DE-A1- 10 012 971
- US-A- 3 425 657
- US-A- 3 635 435
- US-A- 5 100 095

## Beschreibung

Die Erfindung betrifft eine Anordnung zur Befestigung eines Innenrückspiegels an einem Fahrzeug, insbesondere Kraftfahrzeug, nach dem Oberbegriff des Patentanspruchs 1 der Erfindung. Gemäß Anspruch 9 der Erfindung betrifft dieselbe ferner ein Fahrzeug mit einer derartigen Befestigungsanordnung.

Aus der DE 1 680 319 A1 ist ein Innenrückspiegel für ein Fahrzeug bekannt, welcher unter Vermittlung eines Halterungsarmes und eines Sockels schwenkbar an einer Fensterumrandung befestigt ist. Hierzu weist der Sockel eine erste, vordere Lagerstelle auf, die durch einen in eine Ausnehmung der Fensterumrandung eingreifenden Haken gebildet ist, sowie eine zweite, hintere Lagerstelle, die durch ein mechanisches Befestigungselement in Form einer elastisch verformbaren Klammer gebildet ist. Die Klammer rastet in eine Öffnung der Fensterumrandung ein. Hierdurch ist es ermöglicht, dass infolge einer bestimmten Belastung der Einheit aus Innenrückspiegel und Halterungsarm diese Einheit freigegeben wird, indem die Klammer sich aus der zugeordneten Öffnung löst.

Die DE 100 12 971 A1 beschreibt des Weiteren einen Fahrzeug-Innenrückblickspiegel, mit einer Halteplatte, die an der Innenseite einer Windschutzscheibe befestigt ist, mit einem Tragfuß, der mittels einer Halterungsanordnung an der Tragplatte angebracht ist, mit einem Spiegelgehäuse, das am Tragfuß angebracht ist, sowie mit ersten, vorderen und zweiten, hinteren Verbindungsmitteln, wobei dieselben so ausgebildet sind, dass der Tragfuß bei aufgetrennten zweiten Verbindungsmitteln um eine durch die ersten Verbindungsmittel gebildeten Querachse schwenkbar ist. Den vorbeschriebenen Befestigungsanordnungen der Innenrückspiegel ist gemein, dass die Innenrückspiegel bei gelöster zweiter Lagerstelle bzw. aufgetrenntem zweiten Verbindungsmittel nicht sicher an der Fensterumrandung bzw. an der Halteplatte gehalten sind und sich demnach im Falle eines Crashereignisses des Fahrzeugs, welches beispielsweise mit einem Kopfanstoß eines Fahrzeuginsassen gegen den Innenrückspiegel einhergeht, undefiniert lösen und so zu einer Gefahrenquelle für die Fahrzeuginsassen werden können.

Aus der US 3 425 657 A ist eine Anordnung zur Befestigung eines Rückspiegels an einem Fahrzeug, insbesondere Kraftfahrzeug, bekannt, wobei der Innenrückspiegel einen Spiegelkopf aufweist, welcher zur Spiegelverstellung unter Vermittlung eines ersten Armes an einem einenends gabelförmig ausgebildeten zweiten Arm angelenkt ist. Der zweite Arm ist anderenends an einer fahrzeugfesten Basisplatte verstellbar gelagert ist. Hierzu weist der zweite Arm anderenends einen Kugelkopf auf, welcher in einer pfannenförmigen Kugelkopffassung der Basisplatte gehaltert ist. Der Kugelkopf wird normalerweise durch Verriegelungsmittel gegen eine Bewegung relativ zur pfannenförmigen Kugelkopffassung in derselben gehalten. Ein Verriegelungsmittel ist durch einen Querschlitz im Kugelkopf gebildet, welcher Querschlitz mit einem in denselben eindringenden Vorsprung der Kugelkopffassung korrespondiert. Ein weiteres Verriegelungsmittel ist durch eine Vielzahl Rippen in der pfannenförmigen Kugelkopffassung gebildet, die von komplementären Nuten im Kugelkopf aufgenommen sind. Die pfannenförmige Kugelkopffassung ist um den Kugelkopf herumgeformt, um ein enges Ineinandergreifen und Zusammenwirken zwischen Querschlitz und Vorsprung sowie zwischen den Rippe und den Nuten zu gewährleisten. Die Verriegelungsmittel sind infolge einer vorbestimmten Kraft, beispielsweise infolge eines Anstoßes, zerbrechlich ausgebildet, um eine Bewegung des Kugelkopfes und des angeschlossenen Rückspiegels innerhalb der pfannenförmigen Kugelkopffassung zu ermöglichen.

Aufgabe der Erfindung ist es, eine im Hinblick auf den Stand der Technik alternative Anordnung zur Befestigung eines Innenrückspiegels an einem Fahrzeug zu schaffen, welche bei Beibehaltung der Vorteile des Standes der Technik bei gelöster zweiter Lagerstelle einen sicheren Halt des durch Schwenken verstellten Innenrückspiegels an einer fahrzeugfesten Basisplatte desselben gewährleistet. Ferner ist es Aufgabe der Erfindung, ein Fahrzeug, insbesondere Kraftfahrzeug, mit einer derartigen Befestigungsanordnung zur Verfügung zu stellen.

Ausgehend von einer Anordnung zur Befestigung eines Innenrückspiegels an einem Fahrzeug, insbesondere Kraftfahrzeug, wobei der Innenrückspiegel einen Spiegelkopf aufweist, welcher unter Vermittlung eines Spiegelfußes an einer fahrzeugfesten Basisplatte verstellbar gelagert ist, wobei der Spiegelfuß in Fahrzeuglängsrichtung (X-Richtung) gesehen zum einen über eine erste, vordere Lagerstelle um eine Fahrzeugquerachse schwenkbar und zum anderen über eine zweite, hintere und infolge einer eine bestimmte Haltekraft übersteigenden Kraft "F" lösbare Lagerstelle an der Basisplatte gelagert ist, wird die gestellte Aufgabe dadurch gelöst, dass die erste, vordere Lagerstelle durch zwei in Fahrzeugquerrichtung (Y-Richtung) gesehen zueinander beabstandet angeordnete Lagerwangen der Basisplatte gebildet ist, welche Lagerwangen jeweils ein Lagerauge aufweisen, in denen der Spiegelfuß mittels einer gemeinsamen oder je einer Lagerachse um eine Fahrzeugquerachse schwenkbar gelagert ist, wobei zumindest eine Lagerwange zum Montieren der betreffenden Lagerachse des Spiegelfußes quer zur Mittenachse des Lagerauges zu demselben hin geschlitzt ausgebildet ist, und wobei besagter Montageschlitz in einem Bereich der zumindest einen Lagerwange angeordnet ist, der von der Fahrzeugfront weg weist.

Hierdurch ist verhindert, zumindest jedoch die Gefahr wirkungsvoll gemindert, dass resultierend aus einem Frontalcrash des Fahrzeugs, bei dem beispielsweise im Falle eines etwaigen Anstoßes eines Fahrzeuginsassen mit seinem Kopf am Innenrückspiegel sich die zweite Lagerstelle löst und der Spiegelfuß samt Spiegelkopf an der Basisplatte eine Schwenkbewegung in Fahrtrichtung des Fahrzeugs vollführt, sich vollständig von der Basisplatte löst, undefiniert in der Fahrgastzelle bewegt und zu gegebenenfalls Verletzungen eines Fahrzeuginsassen führt. Im erfindungswesentlichen Lastfall bzw. im Crashfall (Frontalcrash) wirken die Kräfte so, dass die Lagerachsen entgegen des jeweiligen Montageschlitzes im zugeordneten Lagerauge, d.h. nach Fahrzeug-vorn kraftbeaufschlagt und somit sicher im Lagerauge gehalten sind.

Die Unteransprüche beschreiben bevorzugte Weiterbildungen oder Ausgestaltungen der Erfindung.

Um die Gefahr des vollständigen Lösens des Spiegelfußes samt Spiegelkopf von der Basisplatte noch weiter zu mindern, weist zumindest der quer zur Mittenachse des Lagerauges der betreffenden Lagerwange in dasselbe einführbare und im Lagerauge abgestützte Abschnitt der Lagerachse einen um ein Kreissegment geminderten kreisrunden Querschnitt auf, wobei das lichte Maß des Schlitzes in der zugeordneten Lagerwange gleich oder geringfügig größer dem um die Höhe "h" des Kreissegments geminderten Durchmesser ""d" der Lagerachse ist. Hierdurch ist bei Gewährleistung einer leichten Montage des Spiegelfußes an der Basisplatte im nach Fahrzeug-vorn geschwenkten Zustand des Spiegelfußes samt Spiegelkopf ein selbsttätiges Austreten der Lagerachse/n aus deren Lageraugen über einen großen Schwenkwinkel noch besser verhindert. Bevorzugt ist das Kreissegment derart an der Lagerachse ausgebildet und angeordnet, dass während der Montage des Spiegelfußes an der Basisplatte die Lagerachse lediglich in einer fiktiven, nach Fahrzeug-vorn gerichteten Schwenkstellung des Spiegelfußes in das Lagerauge einführbar ist. Diese Schwenkstellung kann sich gegebenenfalls auch im erfindungswesentlichen Lastfall bzw. im besagten Crashfall (Frontalcrash) ergeben, jedoch wirken dann die Kräfte ebenfalls so, dass die Lagerachse/n entgegen des jeweiligen Montageschlitzes im zugeordneten Lagerauge kraftbeaufschlagt sind und somit nicht durch den besagten Montageschlitz hindurch aus dem betreffenden Lagerauge austreten können. Was die zweite, hintere und beispielsweise infolge eines Crashereignisses lösbare Lagerstelle anbelangt, weist diese bevorzugt zumindest ein Halteelement auf. Weiter bevorzugt ist das zumindest eine Halteelement durch ein Klammer- oder Clipselement oder eine Haltefeder gebildet, welche/s einenends fest mit dem Spiegelfuß und anderenends durch Form- und/oder Kraftschluss fest, jedoch infolge erhöhter Krafteinwirkung lösbar mit der Basisplatte verbunden ist, oder umgekehrt. Alternativ kann das zumindest eine Halteelement auch eine Sollbruchstelle aufweisen, welche infolge einer definierten erhöhten Kraft bricht. Darüber hinaus ist vorgesehen, dass die Basisplatte an einer Windschutzscheibe oder einem anderen Bauteil des Fahrzeugs, insbesondere Karosseriebauteil desselben, befestigt ist. Gemäß einer einfachen und kostengünstigen Ausführungsform der Erfindung ist die Basisplatte durch Klebung an der Windschutzscheibe oder dem anderen Bauteil des Fahrzeugs befestigt.

Die Erfindung betrifft auch ein Fahrzeug, insbesondere Kraftfahrzeug, mit einer Befestigungsanordnung der vorbeschriebenen Art.

Nachstehend wird die Erfindung anhand der in den Zeichnungen schematisch dargestellten Ausführungsbeispiele näher erläutert. Sie ist jedoch nicht auf diese beschränkt, sondern erfasst alle durch die Patentansprüche definierten Ausgestaltungen. Für die Zwecke der vorliegenden Beschreibung soll die übliche Fahrtrichtung eines Kraftfahrzeugs mit "-x" ("minus x"), die Richtung entgegen seiner üblichen Fahrtrichtung mit"+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit"-y", die Richtung in der Vertikalen quer zur x-Richtung nach oben gesehen mit"+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies werden Begriffe wie "vorne", "hinten", "oben" "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden. Es zeigen:
- Fig. 1: äußerst schematisch ein Fahrzeug respektive Kraftfahrzeug mit einem Innenrückspiegel, welcher an einer Windschutzscheibe des Kraftfahrzeugs befestigt ist,
- Fig. 2: eine perspektivische Vorderansicht des Innenrückspiegels gemäß einer ersten Ausführungsvariante desselben,
- Fig. 3: der Innenrückspiegel nach Fig. 2 in einer perspektivischen Rückansicht,
- Fig. 4: eine Längsschnittdarstellung des Innenrückspiegels nach Fig. 2,
- Fig. 5: eine Schnittdarstellung des Innenrückspiegels entlang der Schnittlinie "I-I" nach Fig. 4,
- Fig. 6: eine Darstellung des Innenrückspiegels in verschiedenen Betriebsstellungen,
- Fig. 7: eine Detailansicht einer Lagerstelle eines Spiegelfußes des Innenrückspiegels,
- Fig. 8: eine perspektivische Vorderansicht des Innenrückspiegels gemäß einer zweiten Ausführungsvariante desselben, und
- Fig. 9: eine Längsschnittdarstellung des Innenrückspiegels nach Fig. 8.

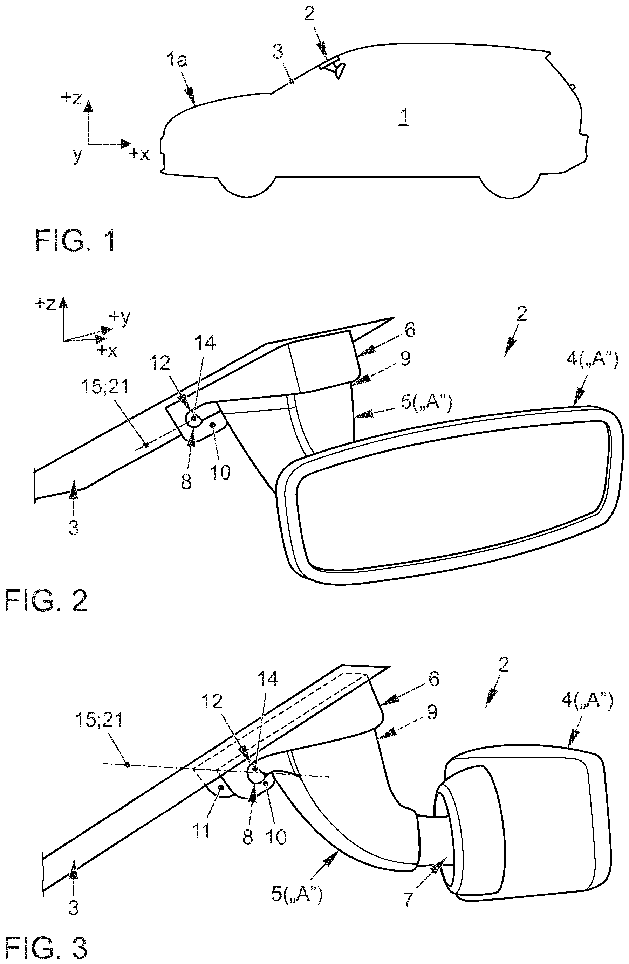

Fig. 1 zeigt zunächst äußerst schematisch ein Fahrzeug 1, vorliegend einen Personenkraftwagen, mit einem Innenrückspiegel 2, welcher an der Windschutzscheibe 3 des Fahrzeugs 1 angebracht ist. Die Erfindung beschränkt sich jedoch nicht auf einen an der Windschutzscheibe 3 angebrachten Innenrückspiegel 2, sondern erfasst auch einen Innenrückspiegel 2, welcher an einem anderen Bauteil des Fahrzeugs 1, insbesondere Karosseriebauteil desselben, wie einem Rahmenelement der Windschutzscheibe 3, angebracht ist.

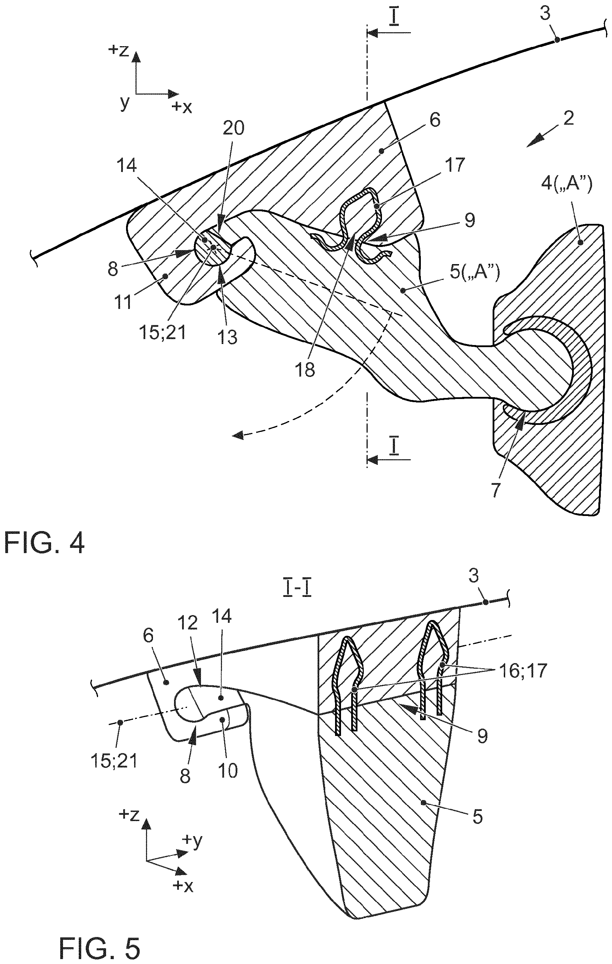

Gemäß den Fig. 1 bis 3 weist der Innenrückspiegel 2 einen Spiegelkopf 4 auf, welcher unter Vermittlung eines Spiegelfußes 5 an einer fahrzeugfesten Basisplatte 6 verstellbar gelagert ist. Die Basisplatte 6 besteht bevorzugt aus einem Kunststoff und ist weiter bevorzugt durch Klebung an der Windschutzscheibe 3 befestigt. Die Verbindung zwischen dem Spiegelkopf 4 und dem Spiegelfuß 5 ist mittels eines Kugelgelenks 7 bewirkt (vgl. insbes. Fig. 3 und 4). Die Lagerung des Spiegelfußes 5 an der Basisplatte 6 ist mittels einer ersten, vorderen Lagerstelle 8 und einer zweiten, hinteren Lagerstelle 9 bewirkt.

Die erste, vordere Lagerstelle 8 ist durch zwei in Fahrzeugquerrichtung (Y-Richtung) gesehen zueinander beabstandet angeordnete Lagerwangen 10, 11 der Basisplatte 6 gebildet, welche jeweils ein Lagerauge 12, 13 aufweisen. Mittels einer gemeinsamen oder gemäß diesem Ausführungsbeispiel je einer Lagerachse 14 ist der Spiegelfuß 5 innerhalb der Lagerwangen 11, 12 um eine Fahrzeugquerachse 15 schwenkgelagert (vgl. insbes. Fig. 3 und 4). Bevorzugt sind die Lagerachsen 14 einstückig mit dem Spiegelfuß 5 und weiter bevorzugt aus einem Kunststoff ausgebildet.

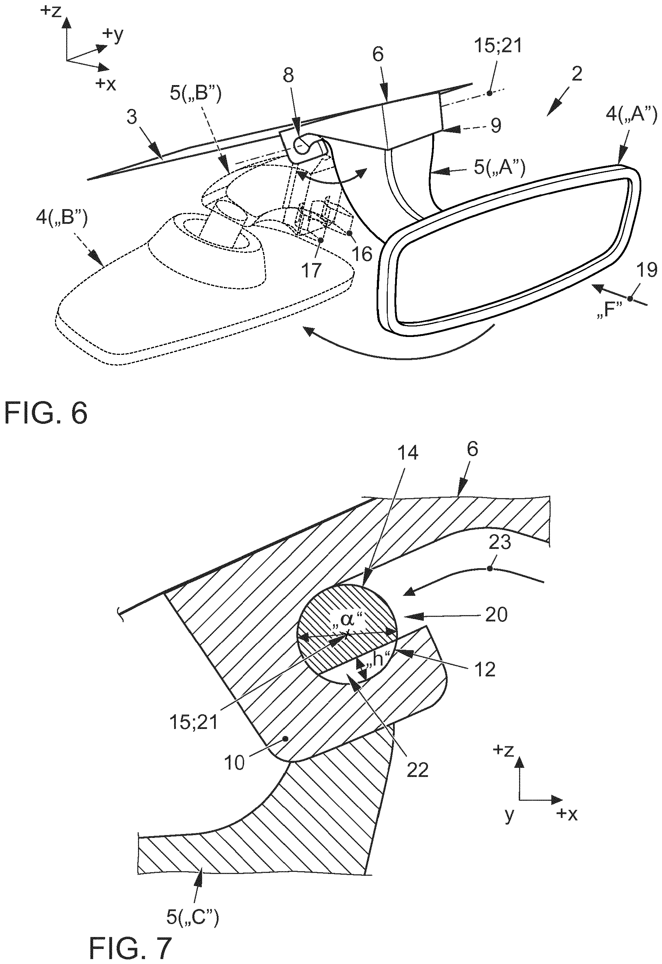

Die zweite, hintere Lagerstelle 9 weist gemäß diesem Ausführungsbeispiel zwei in Fahrzeugquerrichtung (Y-Richtung) gesehen beabstandet zueinander angeordnete Halteelemente 16, 17 auf. Diese sind jeweils durch ein Klammerelement bzw. Clipselement gebildet, welches gemäß diesem Ausführungsbeispiel elastisch bzw. federelastisch ausgebildet ist und einenends, vorliegend mit dem Spiegelfuß 5 fest verbunden ist und anderenends durch Form- und/oder Kraftschluss in eine korrespondierende Öffnung 18 der Basisplatte 6 eingreift (vgl. insbes. Fig. 4 und 5). Die Haltekraft der Halteelemente 16, 17 ist derart gewählt, dass diese sich infolge einer bestimmten erhöhten Krafteinwirkung auf den Spiegelkopf 4 und/oder Spiegelfuß 5 von der Basisplatte 6 lösen. Die besagte erhöhte Krafteinwirkung kann beispielsweise, wie in Fig. 6 durch den Richtungspfeil 19 angedeutet, aus einem Kopfaufschlag (Kraft "F") eines nicht zeichnerisch dargestellten Fahrzeuginsassen infolge eines Frontalcrashereignisses des Fahrzeugs 1 resultieren. Insoweit zeigt Fig. 6 den Spiegelkopf 4 samt Spiegelfuß 5 in zwei Betriebsstellungen, zum einen in einer Funktionsstellung "A" (durchgezogene Linienführung) zur bestimmungsgemäßen Nutzung des Innenrückspiegels 2 und zum anderen in einer Sicherheitsstellung "B" (gestrichelte Linienführung) in welcher der Spiegelkopf 4 samt Spiegelfuß 5 infolge des besagten Kopfaufschlages (Kraft "F") nach Fahrzeug-vorn geschwenkt ist.

Wie den Fig. 2 bis 7 weiter zu entnehmen ist, ist zumindest eine der Lagerwangen 10, 11 zum Montieren der betreffenden Lagerachse 14 an der Basisplatte 6 des Spiegelfußes 5 geschlitzt ausgebildet. Der Montageschlitz 20 erstreckt sich quer zur Mittenachse 21 des Lagerauges 12, 13, welche der vorerwähnten Fahrzeugquerachse 15 entspricht, zum Lagerauge 12, 13 hin. Bevorzugt weist eine jede Lagerwange 10, 11 besagten Montageschlitz 20 auf.

Wie den Fig. 2 bis 7 noch zu entnehmen ist, sind die Montageschlitze 20 (vorliegend nur ein Montageschlitz 20 gezeigt) jeweils in einem Bereich der betreffenden Lagerwange 10, 11 angeordnet, der in Fahrzeuglängsrichtung (X-Richtung) gesehen von der Fahrzeugfront 1a (vgl. Fig. 1) weg weist.

Ferner ist aus den Fig. 2 bis 7 ersichtlich, dass zumindest der quer zur besagten Mittenachse 21 des Lagerauges 12, 13 der jeweiligen Lagerwange11, 12 in dasselbe einführbare und im Lagerauge 12, 13 abgestützte Abschnitt der Lagerachse 14 einen um ein Kreissegment 22 (vgl. insbes. Fig. 7) geminderten kreisrunden Querschnitt aufweist, wobei das lichte Maß des Montageschlitzes 20 in der zugeordneten Lagerwange 10, 11 gleich oder geringfügig größer dem um die Höhe "h" des Kreissegments 22 geminderten Durchmesser ""d" der Lagerachse 14 ist. Die Montage der Lagerachsen 14 des Spiegelfußes 5 an der Basisplatte 6 ist hierdurch lediglich in einer fiktiven, nach Fahrzeug-vorn gerichteten Schwenkstellung "C" (vgl. Situation gemäß Fig. 7) des Spiegelfußes 5 erlaubt, indem die Lagerachsen 14 in besagter Schwenkstellung "C" gemäß dem Richtungspfeil 23 von Fahrzeug-hinten nach Fahrzeug-vorn in den betreffenden Montageschlitz 20 eingeschoben und zum Lagerauge 12, 13 hin geführt werden. Durch Zurückschwenken des Spiegelfußes 5 werden die Halteelemente 16, 17 in die jeweils zugeordnete Öffnung 18 der Basisplatte 6 rastend eingeführt (vgl. Situation gemäß Fig. 4).

Bei Gewährleistung einer leichten Montage des Spiegelfußes 5 an der Basisplatte 6 im nach Fahrzeug-vorn geschwenkten Zustand des Spiegelfußes 5 ist darüber hinaus durch diese Fügeverbindung ein selbsttätiges Austreten der Lagerachse/n 14 aus deren Lageraugen 12, 13 über einen großen Schwenkwinkel noch besser verhindert. Die Schwenkstellung "C" (Fig. 7) zur Montage des Spiegelfußes 5 kann sich gegebenenfalls auch im erfindungswesentlichen Lastfall bzw. im besagten Crashfall (Frontalcrash) ergeben, jedoch wirken dann die Kräfte derart auf den Spiegelfuß 5 und dessen Lagerachse/n 14, dass letztere entgegen des jeweiligen Montageschlitzes 20 im zugeordneten Lagerauge 11, 12 kraftbeaufschlagt sind und somit nicht durch den besagten Montageschlitz 20 hindurch aus dem betreffenden Lagerauge 12, 13 austreten können.

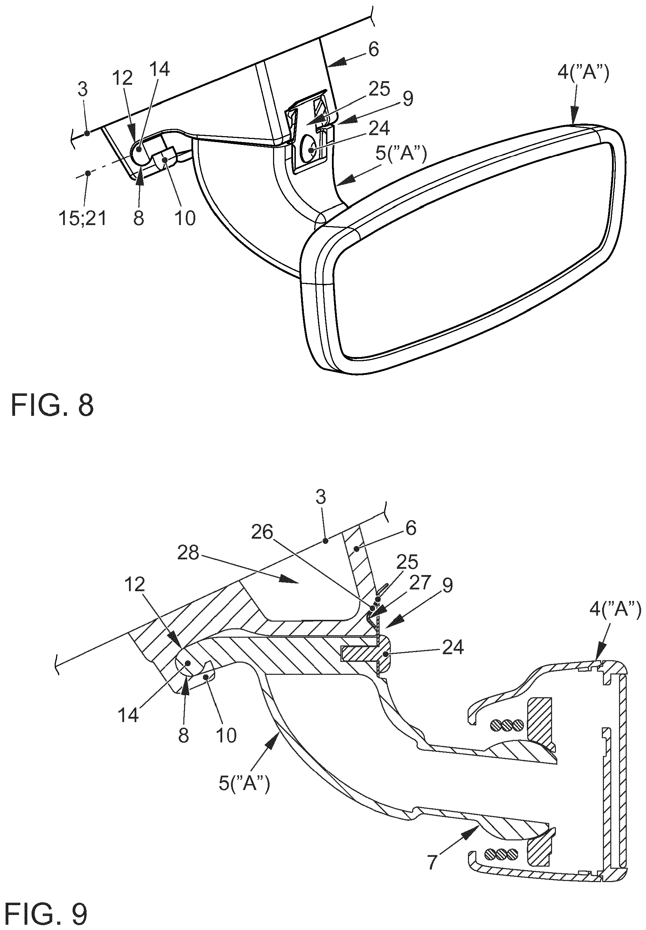

Die Ausführungsvariante der Erfindung gemäß den Fig. 8 und 9 unterscheidet sich zur vorbeschriebenen Ausführungsvariante zunächst durch eine andere Ausbildung der zweiten, hinteren Lagerstelle 9. Diese Lagerstelle 9 zeichnet sich durch ein von außen am Spiegelfuß 5 mittels zumindest einer Schraube 24 befestigtes Haltelement 25 in Form einer Haltefeder aus, welche mit zumindest einem Rastmittel 26 ausgebildet ist, das im montierten Zustand unter Vorspannung mit einem Gegenrastmittel 27 der Basisplatte 6 verrastet. Die Haltefeder ist durch ein Federblech gebildet, welches gemäß diesem Ausführungsbeispiel ein Rastmittel 26 in Form eines ausgeformten Vorsprungs aufweist, der von dem Gegenrastmittel 27 in Form einer Ausnehmung in der Basisplatte 6 formschlüssig aufgenommen ist. Die Erfindung beschränkt sich jedoch nicht auf ein Rastmittel 26, sondern erfasst auch zwei oder mehr Rastmittel 26 am Halteelement 25 oder zwei oder mehr mit zumindest einem Rastmittel 26 ausgestattete Haltelemente 25 (nicht zeichnerisch dargestellt).

Die Haltekraft des Haltelements 25 ist derart gewählt, dass dieses sich infolge einer bestimmten erhöhten Krafteinwirkung auf den Spiegelkopf 4 und/oder Spiegelfuß 5 von der Basisplatte 6 löst. Die besagte erhöhte Krafteinwirkung kann beispielsweise in Anlehnung an die vorbeschriebene erste Ausführungsvariante der Erfindung (vgl. Fig. 6) aus einem Kopfaufschlag (Kraft "F") eines nicht zeichnerisch dargestellten Fahrzeuginsassen infolge eines Frontalcrashereignisses des Fahrzeugs 1 resultieren.

Darüber hinaus ist in Fig. 9 eine Basisplatte 6 gezeigt, welche windschutzscheibenseitig eine Öffnung 28 zur Anordnung eines nicht zeichnerisch dargestellten Sensors in derselben, wie beispielsweise zur Anordnung eines Regensensors o.a. aufweist. Eine derartige Öffnung kann auch in der Basisplatte 6 gemäß der ersten Ausführungsvariante der Erfindung vorgesehen sein und ist demgemäß durch die Erfindung ebenfalls mit erfasst (nicht zeichnerisch dargestellt).

Die vorstehend beschriebenen Ausführungsbeispiele stellen auf Halteelemente 16, 17; 25 in Form von Klammer- bzw. Clipselementen oder einer Haltefeder 25 ab, die durch Form- und/oder Kraftschluss mit der Basisplatte 6 verbunden oder verbindbar sind. Die Erfindung beschränkt sich jedoch nicht auf diese konkreten Fügeverbindungen, sondern erfasst auch nicht zeichnerisch dargestellte Halteelemente 16, 17, 25, die sowohl mit dem Spiegelfuß 5 als auch mit der Basisplatte 6 fest verbunden sind, jedoch jeweils eine Sollbruchstelle aufweisen, die infolge erhöhter Krafteinwirkung bricht bzw. versagt.

Des Weiteren beschränkt sich die Erfindung auch nicht auf die bevorzugt Ausführung der Basisplatte 6 mit zwei geschlitzten Lagerwangen 10, 11, sondern erfasst auch eine Ausführung, bei der lediglich eine der Lagerwangen 10, 11 geschlitzt ausgebildet ist (nicht zeichnerisch dargestellt). In diesem Fall erfolgt die Montage im Unterschied zur vorbeschriebenen Ausführung derart, dass zunächst die oben bereits beschriebene fiktive Schwenkstellung "C" des Spiegelfußes 5 (Fig. 7) eingestellt wird, im Anschluss daran eine Lagerachse 14 axial oder weitestgehend axial von Lagerwange-innen her in das Lagerauge 13 der nicht geschlitzten Lagerwange 11 eingeführt wird und schließlich die andere Lagerachse 14 wie bereits oben beschrieben quer zur Mittenachse 21 des Lagerauges 12 der anderen Lagerwange 10 in das besagte Lagerauge 12 eingeführt wird.

### Bezugszeichenliste

- 1: Fahrzeug
- 1a: Fahrzeugfront
- 2: Innenrückspiegel
- 3: Windschutzscheibe
- 4: Spiegelkopf
- 5: Spiegelfuß
- 6: Basisplatte
- 7: Kugelgelenk
- 8: erste Lagerstelle
- 9: zweite Lagerstelle
- 10: Lagerwange
- 11: Lagerwange
- 12: Lagerauge
- 13: Lagerauge
- 14: Lagerachse
- 15: Fahrzeugquerachse
- 16: Halteelement
- 17: Halteeelement
- 18: Öffnung
- 19: Richtungspfeil
- 20: Montageschlitz
- 21: Mittenachse
- 22: Kreissegment
- 23: Richtungspfeil
- 24: Schraube
- 25: Halteelement
- 26: Rastmittel
- 27: Gegenrastmittel
- 28: Öffnung (Basisplatte 6)
- "d": Durchmesser (Lagerachse 14)
- "h": Höhe (Kreissegment 22)
- "A": Funktionsstellung
- "B": Sicherheitsstellung
- "C": Schwenkstellung zur Montage

## Patentansprüche

1. Anordnung zur Befestigung eines Innenrückspiegels (2) an einem Fahrzeug (1), insbesondere Kraftfahrzeug, wobei der Innenrückspiegel (2) einen Spiegelkopf (4) aufweist, welcher unter Vermittlung eines Spiegelfußes (5) an einer fahrzeugfesten Basisplatte (6) verstellbar gelagert ist, wobei der Spiegelfuß (5) in Fahrzeuglängsrichtung (X-Richtung) gesehen zum einen über eine erste, vordere Lagerstelle (8) um eine Fahrzeugquerachse (15) schwenkbar und zum anderen über eine zweite, hintere und infolge einer eine bestimmte Haltekraft übersteigenden Kraft "F" lösbare Lagerstelle (9) an der Basisplatte (6) gelagert ist, **dadurch gekennzeichnet, dass** die erste, vordere Lagerstelle (8) durch zwei in Fahrzeugquerrichtung (Y-Richtung) gesehen zueinander beabstandet angeordnete Lagerwangen (10, 11) der Basisplatte (6) gebildet ist, welche Lagerwangen (10, 11) jeweils ein Lagerauge (12, 13) aufweisen, in denen der Spiegelfuß (5) mittels einer gemeinsamen oder je einer Lagerachse (14) um eine Fahrzeugquerachse (15) schwenkbar gelagert ist, wobei zumindest eine Lagerwange (10, 11) zum Montieren der betreffenden Lagerachse (14) des Spiegelfußes (5) quer zur Mittenachse (21) des Lagerauges (12, 13) zu demselben hin geschlitzt ausgebildet ist, und wobei besagter Montageschlitz (20) in einem Bereich der zumindest einen Lagerwange (10, 11) angeordnet ist, der von der Fahrzeugfront (1a) weg weist.

2. Anordnung nach dem vorhergehenden Anspruch, **dadurch gekennzeichnet, dass** zumindest der quer zur Mittenachse (21) des Lagerauges (12, 13) der betreffenden Lagerwange (10, 11) in dasselbe einführbare und im Lagerauge (12, 13) abgestützte Abschnitt der Lagerachse (14) einen um ein Kreissegment (22) geminderten kreisrunden Querschnitt aufweist, wobei das lichte Maß des Montageschlitzes (20) in der zugeordneten Lagerwange (10, 11) gleich oder geringfügig größer dem um die Höhe "h" des Kreissegments (22) geminderten Durchmesser ""d" der Lagerachse (14) ist.

3. Anordnung nach Anspruch 2, **dadurch gekennzeichnet, dass** das Kreissegment (22) derart an der Lagerachse (14) ausgebildet und angeordnet ist, dass während der Montage des Spiegelfußes (5) an der Basisplatte (6) die Lagerachse (14) lediglich in einer fiktiven, nach Fahrzeug-vorn gerichteten Schwenkstellung "C" des Spiegelfußes (5) in das Lagerauge (12, 13) einführbar ist.

4. Anordnung nach einem der vorhergehenden Ansprüche, **dadurch gekennzeichnet, dass** die zweite, hintere Lagerstelle (9) zumindest ein Halteelement (16, 17; 25) aufweist.

5. Anordnung nach Anspruch 4, **dadurch gekennzeichnet, dass** das zumindest eine Halteelement (16, 17; 25) durch ein Klammer- oder Clipselement oder eine Haltefeder gebildet ist, welche/s einenends fest mit dem Spiegelfuß (5) und anderenends durch Form- und/oder Kraftschluss fest, jedoch infolge erhöhter Krafteinwirkung lösbar mit der Basisplatte (6) verbunden ist, oder umgekehrt.

6. Anordnung nach Anspruch 4 oder 5, **dadurch gekennzeichnet, dass** das zumindest eine Halteelement (16, 17; 25) eine Sollbruchstelle aufweist.

7. Anordnung nach einem der vorhergehenden Ansprüche, **dadurch gekennzeichnet, dass** die Basisplatte (6) an einer Windschutzscheibe (3) oder einem anderen Bauteil des Fahrzeugs (1), insbesondere Karosseriebauteil desselben, befestigt ist.

8. Anordnung nach Anspruch 7, **dadurch gekennzeichnet, dass** die Basisplatte () durch Klebung an der Windschutzscheibe () oder dem anderen Bauteil des Fahrzeugs () befestigt ist.

9. Fahrzeug (1), insbesondere Kraftfahrzeug, mit einer Befestigungsanordnung nach einem der vorhergehenden Ansprüche.

## Claims

1. Arrangement for mounting an inside rear-view mirror (2) to a vehicle (1), in particular a motor vehicle, wherein the inside rear-view mirror (2) has a mirror head (4) which is adjustably mounted by means of a mirror base (6) on a base plate (5) fixed to the vehicle, wherein the mirror base (5) viewed in the longitudinal vehicle direction (X-direction) is pivotable on the one hand about a transverse vehicle axis (15) via a first, front bearing point (8) and on the other hand is mounted on the base plate (6) via a second, rear bearing point (9) that is releasable as a result of a force F exceeding a specific holding force, **characterized in that** the first, front bearing point (8) is formed by two bearing cheeks (10, 11) of the base plate (6) that are spaced apart from one another as seen in the transverse vehicle direction (Y-direction), said bearing cheeks (10, 11) each having a bearing eye (12, 13) in which the mirror base (5) is pivotably mounted about a transverse vehicle axis (15) by means of a common bearing axis (14) or one bearing axis (14) each, wherein at least one bearing cheek (10, 11) for mounting the relevant bearing axis (14) of the mirror base (5) transversely to the center axis (21) of the bearing eye (12, 13) is slotted toward the same, and wherein said mounting slot (20) is arranged in a region of the at least one bearing cheek (10, 11) that faces away from the front of the vehicle (1a).

2. Arrangement according to the preceding claim, **characterized in that** at least the section of the bearing axis (14) transverse to the center axis (21) of the bearing eye (12, 13) of the bearing cheek in question (10, 11) has a circular cross-section reduced by a circular segment (22) and is insertable in and supported in the bearing eye (12, 13), wherein the clear dimension of the mounting slot (20) in the assigned bearing cheek (10, 11) is equal to or slightly larger than the diameter d of the bearing axis (14) reduced by the height h of the circular segment (22).

3. Arrangement according to Claim 2, **characterized in that** the circular segment (22) is formed and arranged on the bearing axis (14) in such a way that during the mounting of the mirror base (5) on the base plate (6), the bearing axis (14) can only be inserted into the bearing eye (12, 13) in a notional pivot position C of the mirror base (5) that is directed toward the front of the vehicle.

4. Arrangement according to any one of the preceding claims, **characterized in that** the second, rear bearing point (9) has at least one holding element (16, 17; 25).

5. Arrangement according to Claim 4, **characterized in that** the at least one holding element (16, 17; 25) is formed by a clamping or clip element or a holding spring which is firmly connected to the mirror base (5) at one end and at the other end is firmly connected to the base plate (6) by a form or force fit but can be released as a result of increased force application, or vice versa.

6. Arrangement according to Claim 4 or 5, **characterized in that** the at least one holding element (16, 17; 25) has a predetermined breaking point.

7. Arrangement according to any one of the preceding claims, **characterized in that** the base plate (6) is mounted to a windshield (3) or another component of the vehicle (1), in particular a body component thereof.

8. Arrangement according to Claim 7, **characterized in that** the base plate () is adhesively mounted to the windshield () or to the other component of the vehicle ().

9. Vehicle (1), in particular a motor vehicle, with a mounting arrangement according to any one of the preceding claims.

## Revendications

1. Dispositif de fixation d'un rétroviseur intérieur (2) sur un véhicule (1), en particulier un véhicule automobile, le rétroviseur intérieur (2) comportant une tête de rétroviseur (4), qui est montée de manière réglable, par l'intermédiaire d'un pied de rétroviseur (5), sur une plaque de base (6) fixée à demeure sur le véhicule, le pied de rétroviseur (5), vu dans la direction longitudinale du véhicule (direction X), étant monté d'une part pivotant sur un axe transversal de véhicule (15) par le biais d'un premier point de palier (8) avant et d'autre part monté sur la plaque de base (6) par le biais d'un second point de palier (9) arrière pouvant être libéré par suite d'une force « F » dépassant une force de retenue déterminée, **caractérisé en ce que** le premier point de palier (8) avant est formé par deux joues de palier (10, 11) de la plaque de base (6), disposées espacées l'une de l'autre, vu dans la direction transversale du véhicule (direction Y), lesdites joues de palier (10, 11) comportant chacune un œil de palier (12, 13), dans lesquels le pied de rétroviseur (5) est monté pivotant sur un axe transversal de véhicule (15) au moyen d'un axe de palier (14) commun ou respectif, au moins une joue de palier (10, 11) étant réalisée, pour le montage de l'axe de palier (14) concerné du pied de rétroviseur (5), transversalement à l'axe central (21) de l'œil de palier (12, 13), fendue en direction de celui-ci, et ladite fente de montage (20) étant disposée dans une zone de l'au moins une joue de palier (10, 11), qui est orientée dans la direction opposée à l'avant du véhicule (1a).

2. Dispositif selon la revendication précédente, **caractérisé en ce qu'**au moins la partie de l'axe de palier (14) qui peut être introduite transversalement à l'axe central (21) de l'œil de palier (12, 13) de la joue de palier (10, 11) concernée dans ledit œil de palier et soutenue dans l'œil de palier (12, 13) présente une section transversale circulaire amputée d'un segment de cercle (22), la dimension de l'ouverture de la fente de montage (20) dans la joue de palier (10, 11) associée étant égale ou faiblement supérieure au diamètre « d » de l'axe de palier (14) amputé de la hauteur « h » du segment de cercle (22).

3. Dispositif selon la revendication 2, **caractérisé en ce que** le segment de cercle (22) est réalisé et disposé de telle manière sur l'axe de palier (14) que, pendant le montage du pied de rétroviseur (5) sur la plaque de base (6), l'axe de palier (14) peut être introduit dans l'œil de palier (12, 13) uniquement dans une position de pivotement « C » fictive, orientée vers l'avant du véhicule, du pied de rétroviseur (5).

4. Dispositif selon l'une quelconque des revendications précédentes, **caractérisé en ce que** le second point de palier (9) arrière comporte au moins un élément de retenue (16, 17 ; 25).

5. Dispositif selon la revendication 4, **caractérisé en ce que** l'au moins un élément de retenue (16, 17 ; 25) est formé par un élément de serrage ou de clipsage ou un ressort de retenue, qui est relié, par une extrémité, solidement au pied de rétroviseur (5) et, par l'autre extrémité, solidement, par complémentarité de forme et/ou par friction mais de manière libérable par suite de l'action d'une force élevée, à la plaque de base (6), ou inversement.

6. Dispositif selon la revendication 4 ou 5, **caractérisé en ce que** l'au moins un élément de retenue (16, 17 ; 25) comporte un point destiné à la rupture.

7. Dispositif selon l'une quelconque des revendications précédentes, **caractérisé en ce que** la plaque de base (6) est fixée à un pare-brise (3) ou à un autre composant du véhicule (1), en particulier un composant de carrosserie de celui-ci.

8. Dispositif selon la revendication 7, **caractérisé en ce que** la plaque de base () est fixée par collage au pare-brise () ou à l'autre composant du véhicule ().

9. Véhicule (1), en particulier véhicule automobile, comprenant un dispositif de fixation selon l'une quelconque des revendications précédentes.
